(19) Europäisches Patentamt

European Patent Office

Office européen des brevets

(11) **EP 0 856 391 B1**

(12) **EUROPÄISCHE PATENTSCHRIFT**

(45) Veröffentlichungstag und Bekanntmachung des Hinweises auf die Patenterteilung:
**01.03.2000   Patentblatt 2000/09**

(51) Int Cl.⁷: **B29C 45/17**, B29C 45/66, B29C 45/68

(21) Anmeldenummer: **98250028.2**

(22) Anmeldetag: **28.01.1998**

(54) **Spritzgiessmaschine**

Injection moulding machine

Machine à mouler par injection

(84) Benannte Vertragsstaaten:
**AT CH DE FR LI**

(30) Priorität: **03.02.1997  DE 19705049**

(43) Veröffentlichungstag der Anmeldung:
**05.08.1998   Patentblatt 1998/32**

(73) Patentinhaber: **MANNESMANN Aktiengesellschaft**
**40213 Düsseldorf (DE)**

(72) Erfinder:
• **Felix, Roland, Dipl.-Ing.**
**06648 Eckartsberga (DE)**

• **Krosse, Dietmar, Dipl.-Ing.**
**06571 Wiehe (DE)**

(74) Vertreter: **Meissner, Peter E., Dipl.-Ing. et al**
**Meissner & Meissner,**
**Patentanwaltsbüro,**
**Hohenzollerndamm 89**
**14199 Berlin (DE)**

(56) Entgegenhaltungen:
**EP-A- 0 554 068        EP-A- 0 689 924**
**WO-A-94/17977        DE-A- 19 535 081**

**Beschreibung**

Die Erfindung betrifft eine Spritzgießmaschine mit einer am Maschinenbett befestigten festen Formaufspannplatte, die über ein Formelement mit einer auf einer mit dem Maschinenbett verbundenen Führung verfahrbaren beweglichen Formaufspannplatte in Verbindung steht, und mit einer zwischen dem Formelement und einer der Formaufspannplatten angeordneten, getrennt angetriebenen Schließkraftbaugruppe. Eine derartige Spritzgießmaschine ist in der nicht vorveröffentlichten DE 19535081 A1 beschrieben.

Aus EP 0 554 068 A1 ist eine Spritzgießmaschine bekannt, die ein Kraftübertragungselement als gesonderten, durch die Kräfte verformbaren Bügel aufweist, und bei der die Abstützplatte am Maschinenfuß in Schließrichtung beweglich gelagert ist. Der Bügel ist C-förmig ausgestaltet und gelenkig mit der festen Aufspannplatte und einer Abstützplatte verbunden. Zwischen der Abstützplatte und der beweglichen Formaufspannplatte ist eine Verfahreinheit vorgesehen.

In nachteiliger Weise wird trotz unterschiedlicher Anforderung einmal zum schnellen Verfahren der beweglichen Formaufspannplatte und beim Aufbringen der Schließkraft nur ein Antriebselement eingesetzt.

Aus EP 0 722 820 A1 ist eine holmlose Formschließeinrichtung für Spritzgießmaschinen bekannt, die einen c-förmigen Maschinenrahmen aufweist, an dessen beiden Schenkeln Werkzeugaufspannplatten angeordnet sind. Mindestens ein Schenkel des Maschinenrahmens weist dabei eine derartige Querschnittsschwächung auf, durch die auftretende Schließkräfte bzw. Zuhaltekräfte eine gesteuerte elastische Verformung des Schenkels derart eintritt, daß keine Winkelabweichung der Montageflächen für die Formhälften des Formwerkzeuges aus ihrer senkrechten Arbeitsstellung erfolgt.

Bei dieser Formschließeinrichtung kommt ein Linearantrieb als Verstelleinrichtung zum Einsatz, der die Funktionen Verfahren und Schließen übernimmt. Weiterhin ist der zähförmige Maschinenrahmen bis auf die geringe Änderung bei der Verformung eines Schenkels in seiner Maulweite verstellbar.

Die Erfindung hat sich das Ziel gesetzt, mit einfachen Mitteln eine Spritzgießmaschine mit zwei Platten zu schaffen, bei der ein Antrieb zum Verfahren der beweglichen Formaufspannplatte und unabhängig davon ein angepaßter Antrieb zum Aufbringen der Schließkraft auf die Schließeinheit eingesetzt wird.

Die Erfindung löst das Problem durch die kennzeichnenden Merkmale des Anspruchs 1. Die weiteren Ansprüche sind vorteilhafte Ausgestaltungen der Erfindung.

Erfindungsgemäß ist das Formelement, das bei der Spritzgießmaschine die am Maschinenbett befestigte feste Formaufspannplatte mit der beweglichen Formaufspannplatte verbindet aus zwei zueinander beweglichen Bauteilen aufgestaltet. Hierbei besteht ein Bauteil in Form eines L's, wobei der kurze Schenkel über ein Gelenk schwenkbar mit der festen Formaufspannplatte verbunden ist und sein langer Schenkel mit einem Klemmteil in Verbindung steht. An dem Klemmteil ist ein Tragarm angeordnet, der über ein Gelenk schwenkbar mit der beweglichen Formaufspannplatte verbunden ist.

Das L-förmige Bauteil und das mit dem Klemmteil verbundene Bauteil sind gegeneinander verfahrbar. Hier kann also ein Verfahrantrieb angeschlossen werden, der sowohl von der Größe wie auch von der erforderlichen Geschwindigkeit die bewegliche Formaufspannplatte in seiner Arbeitsposition fahren kann.

Die Schließkraftbaugruppe ist unabhängig vom Verfahrantrieb koaxial zur durch die Gelenke geführte Hauptachse zwischen einer der Formaufspannplatten und dem Formelement angeordnet.

Das Klemmteil kann angemessener Weise angetrieben werden, z.B. hydraulisch oder auch elektrisch, mit einer Spindelmuttereinheit oder auch über eine Kette.

Das Klemmteil kann in vorteilhafter Weise als Platte, als Hülse oder auch als Kolben ausgestaltet sein. Unabhängig von der Bauform weist das Klemmteil eine Länge L auf und besitzt zur Hauptachse der Spritzgießmaschine einen Abstand a, wobei unter Berücksichtigung eines Reibfaktors $\mu$ folgende Bedingung vorgegeben wird:

$$L < 2\mu a.$$

Unter Berücksichtigung dieser Bedingung kann das Klemmteil und die damit verbundene bewegliche Formaufspannplatte mit hoher Geschwindigkeit verfahren werden. Bei Erreichen der Arbeitsposition und Betätigen der Schließkraftbaugruppe kippt der mit dem Klemmteil verbundene Tragarm und es kommt zur Verklemmung zwischen dem Klemmteil und dem langen Schenkel des L-förmigen Formteils.

In einer vorteilhaften Ausgestaltung weisen die bei der Klemmung zum Einsatz kommenden Seiten Längsnuten auf, welche einen Spreizwinkel zwischen 10 und 30° besitzen. Hierbei wird die Klemmfläche bezogen auf die Baugröße des Klemmteils deutlich erhöht.

Eine weitere Verbesserung der Klemmung wird dadurch erreicht, daß die Gleitflächen eine höhere Oberflächenrauhheit aufweisen.

Die Schließkraftbaugruppe sind in vorteilhafter Weise entweder als Exzenter, als hydraulische Kolben-Zylinder-Einheit, hier insbesondere als Kurzhubzylinder oder auch in Form eines Kniehebels ausgestaltet.

In einer Ausgestaltung ist der Kniehebel mit seinen beiden Pleueln zwischen den Tragarmen und der beweglichen Formaufspannplatte angeordnet. In einer weiteren vorteilhaften Ausgestaltung ist ein Pleuel des Kniehebels mit dem Tragarm und das andere Pleuel des Kniehebels mit dem kurzen Schenkel des L-förmigen Formteils schwenkbar verbunden. Beide Pleuel weisen dabei eigene Antriebe auf.

Es zeigt sich, daß bei der Zweiteilung des Formteils, das durch den Einsatz eines L-förmigen Bauteils und hiermit über ein Klemmteil verbundenen Tragarm insgesamt die Form eines C-Bügels aufweist, die Einstellbarkeit der wirksamen Länge erlaubt und darüber hinaus die Möglichkeit der Funktionsteile und Antriebstechnik zuläßt.

Hierdurch ist eine angepaßte und dabei einfach und kostengünstige Antriebstechnik möglich.

Durch den Gesamtaufbau ist bei der vorliegenden Lösung ein nur geringer Platzbedarf erforderlich.

Ein Beispiel der Erfindung ist in der beiliegenden Zeichnung dargelegt. Dabei zeigen:

Figur 1 - 5     Spritzgießmaschinen mit unterschiedlich ausgestalteten Klemm- und Schließeinrichtungen

Figur 6 + 7     im Detail Ausgestaltungen des langen Schenkels 23 und des Klemmteils 31.

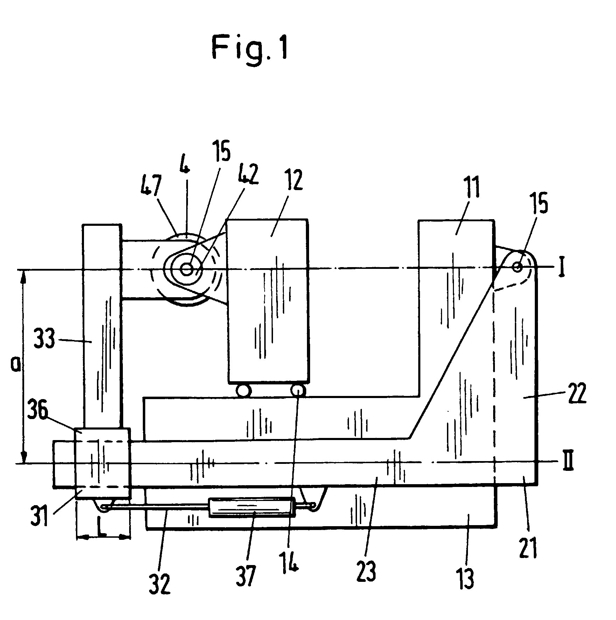

Die Figuren 1 - 5 zeigen eine feste Formaufspannplatte 11, die an einem Maschinenbett 13 befestigt ist. Die feste Formaufspannplatte 11 besitzt ein Gelenk 15, an das schwenkbar ein L-förmiges Formteil 21 angebracht ist. Das Formteil 21 weist einen kurzen Schenkel 22 und einen langen Schenkel 23 auf.

Mit dem langen Schenkel 23 ist ein Klemmteil 31 verbunden, welches eine Länge L aufweist. Am Klemmteil 31 ist ein Tragarm 33 befestigt, der über eine Schließeinrichtung mit einem Gelenk 15 einer beweglichen Formaufspannplatte 12 in Verbindung steht. Der Tragarm 33 hat dabei eine Länge, daß während des Klemmens die Mittenachse II des langen Schenkels 23 einen Abstand a besitzt zur Hauptachse I.

Das Klemmteil 31 steht mit einem Verfahrantrieb 32 in Verbindung, mit dem die bewegliche Formaufspannplatte zur festen Formaufspannplatte hin und davon weg bewegt wird. Zum einfachen und exakten Führen der beweglichen Aufspannplatte 12 ist eine Führung 14 vorgesehen.

Bei der Figur 1 kommt ein Verfahrantrieb 32 zum Einsatz, der als Kolben-Zylinder-Einheit ausgestaltet ist.

Das Klemmteil 31 ist als Hülse 36 ausgestaltet.

Zwischen dem Tragarm 33 und der beweglichen Aufspannplatte 12 ist als Schließbaugruppe 41 ein Exzenter 42 vorgesehen, der von einer Elektrikeinheit 47 angetrieben wird.

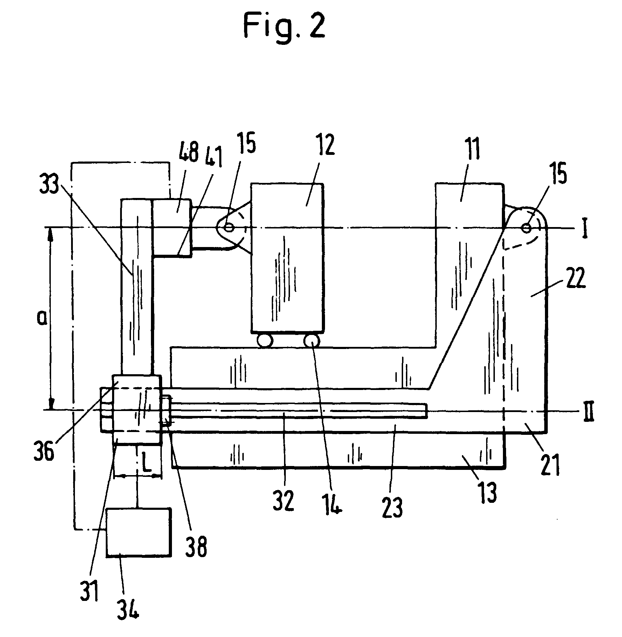

Bei der Figur 2 kommt als Verfahrantrieb 32 eine Spindel mit einem Spindelantrieb 38 zum Einsatz.

Das Klemmteil 31 ist als Hülse 36 ausgestaltet und steht mit einem Aktuator 34 hydraulisch in Verbindung.

An der Hülse 36 ist der Tragarm 33 befestigt, der kopfendig als Schließbaugruppe 41 eine Kolben-Zylinder-Einheit 48 aufweist, die mit der beweglichen Formaufspannplatte 12 über ein Gelenk 15 in Verbindung steht. Die Kolben-Zylinder-Einheit 48 ist ebenfalls mit dem Aktuator 34 verbunden.

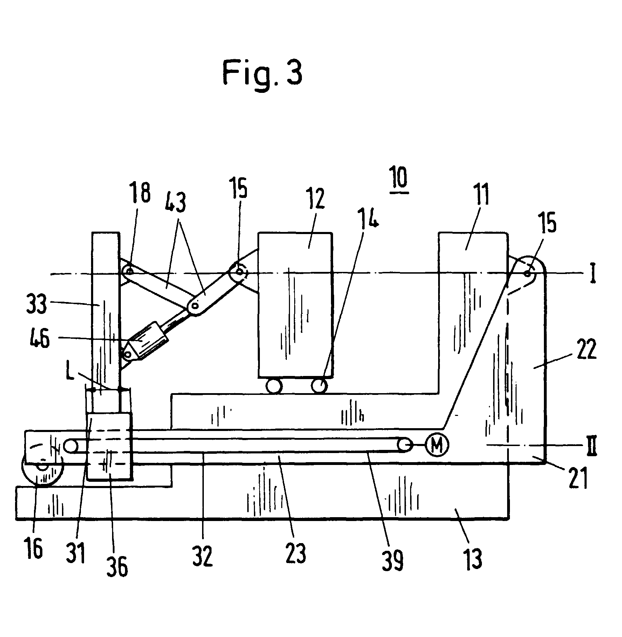

Figur 3 besitzt ein Verfahrantrieb 32, der als Kettenantrieb 39 ausgestaltet ist und durch einen Motor M angetrieben wird.

Die Kette ist an das als Hülse 36 ausgestaltete Klemmteil 31 angeschlossen.

Der lange Schenkel 23 des L-förmigen Formteils 21 weist kopfendig eine Lagerung 16 auf.

Zwischen dem an der Hülse 36 des Klemmteils 31 befestigten Tragarm 33 ist ein Kniehebel 43 befestigt, der über eine Hydraulikeinheit 46 betätigt wird.

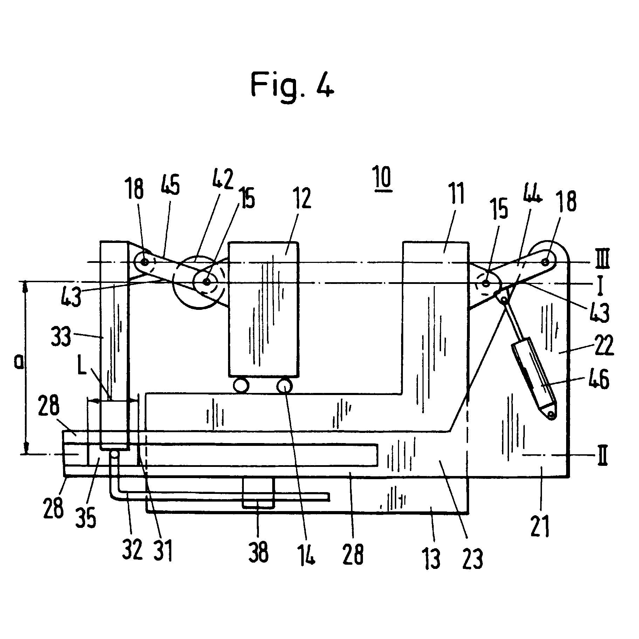

In der Figur 4 ist der Verfahrantrieb 32 als Spindelantrieb 38 ausgestaltet.

Das Klemmteil 31 besitzt die Form einer Klemmplatte 35, die in einem als U-Profil 28 ausgebildeten langen Schenkel 23 geführt wird.

Zwischen dem mit der Klemmplatte 35 verbundenen Tragarm 33 und der beweglichen Formaufspannplatte 12 ist ein Pleuel 45 eines Kniehebels 43 angeordnet. Am Kopf des Pleuels 45 ist ein Exzenter 42 vorgesehen.

Zwischen dem kurzen Schenkel 22 des L-förmigen Formteils 21 und dem Gelenk 15 der festen Formaufspannplatte 11 ist ein Pleuel 44 des Kniehebels 43 vorgesehen, daß über eine Hydraulikeinheit 46 bewegt wird.

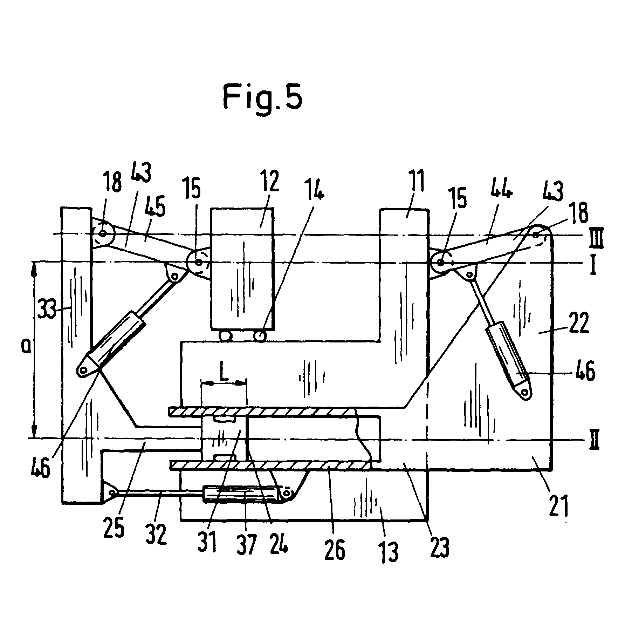

In der Figur 5 ist der Verfahrantrieb 32 als Kolben-Zylinder-Einheit 37 ausgebildet.

Bei der in Figur 5 dargelegten Ausgestaltung bezüglich der Schließ- und Klemmeinrichtung ist in vorteilhafter Weise eine Funktionsteilung möglich, wobei das hochbelastete Klemmteil nicht bei jedem Zyklus bewegt, sondern nur beim Einrichten zum Zwecke der Werkzeughöhenverstellung. Der zugehörige Antrieb kann entsprechend schwächer ausgelegt werden.

Der Tragarm 33 besitzt eine Verlängerung 25, die kopfendig ein als Zylinder 24 ausgebildete Klemmteil 31 aufweist. Der Kolben 24 korrespondiert dabei mit dem als Zylinder 26 ausgestalteten langen Schenkel 23 des L-förmigen Formteils 21.

Als Schließkraftbaugruppe kommt ein Kniehebel 43 zum Einsatz, der ein Pleuel 44 besitzt, welches zwischen dem kurzen Schenkel 22 und der festen Formaufspannplatte 11 angeordnet und an einer Hydraulikeinheit 46 bewegt wird, wie auch einem Pleuel 45, welches zwischen dem Tragarm 33 und der beweglichen Formaufspannplatte 12 angeordnet und durch eine Hydraulikeinheit 46 bewegt wird.

Die durch die Lagerung 18 des kurzen Schenkels 22 des L-förmigen Formteils 21 und des Tragarms 33 sich befindete Achse III ist im vorliegenden Fall oberhalb der Hauptachse I, so lange das Werkzeug außerhalb seiner Schließposition ist.

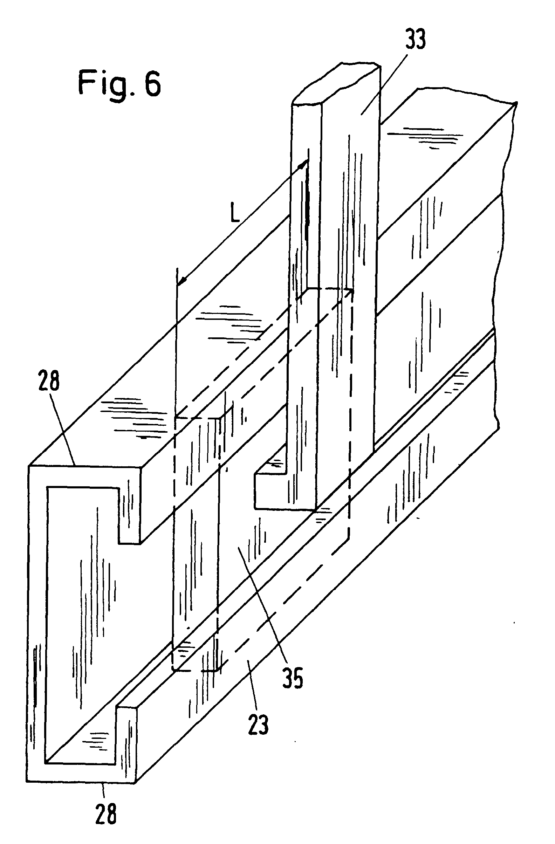

In der Figur 6 ist der lange Schenkel 23 als U-Profil 28 ausgestaltet, in welchem eine Klemmplatte 35 geführt wird. An der Klemmplatte 35 ist der Tragarm 33 befestigt.

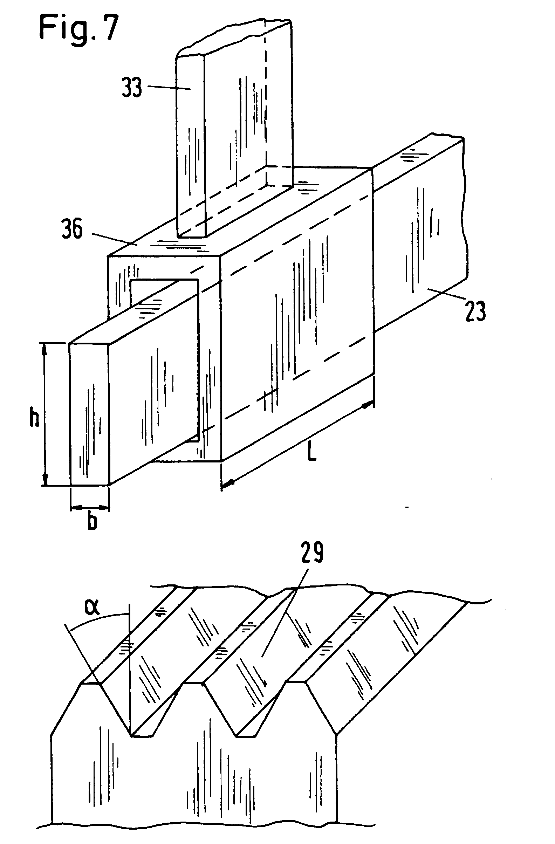

In der Figur 7 ist der lange Schenkel 23 als rechteckiges Profil mit der Breite b und der Höhe h ausgebildet und wird von einer Hülse 36 umgriffen. An der Hülse 36 ist der Tragarm 36 befestigt. Im unteren Teil der Figur 4 ist die Schmalseite des langen Schenkels 23 mit Längsnuten 29 versehen worden, die einen flanken Winkel α besitzen.

## Positionsliste

### Spritzgießmaschine

11   Feste Formaufspannplatte
12   Bewegliche Formaufspannplatte
13   Maschinenbett
14   Führung von (12)
15   Gelenk (11, 12)
16   Lagerung
17   Wälzführung
18   Gelenk (22, 23)

### Bügel

21   L-förmiges Formteil
22   Kurzer Schenkel von 21
23   Langer Schenkel von 21
24   Kolben
25   Verlängerung Tragarm 33
26   Zylinder
27   Formschlüssige Schiene
28   U-Profil
29   Längsnuten

### Klemmeinrichtung

31   Klemmteil
32   Verfahrantrieb
33   Tragarm
34   Aktuator
35   Klemmplatte
36   Hülse
37   Kolben-Zylinder-Einheit
38   Spindelantrieb
39   Kettenantrieb

### Schließeinrichtung

41   Schließkraftbaugruppe
42   Exzenter
43   Kniehebel
44   Pleuel zu 11
45   Pleuel zu 12
46   Hydraulikeinheit
47   Elektrikeinheit

48   Kolben-Zylinder-Einheit

L   Länge Klemmteil
a   Abstand I zu II
b   Breite
h   Höhe
I   Hauptachse
II   Mittelachse Klemmteil
III   Achse (18)
α   Flankenwinkel

## Patentansprüche

1.  Spritzgießmaschine mit einer am Maschinenbett (13) befestigten festen Formaufspannplatte (11), die über ein Formelement mit einer auf einer mit dem Maschinenbett (13) verbundenen Führung verfahrbaren beweglichen Formaufspannplatte (12) in Verbindung steht, und mit einer zwischen dem Formelement und einer der Formaufspannplatten (11,12) angeordneten, *getrennt angetriebenen* Schließkraftbaugruppe (41), dadurch gekennzeichnet,

    daß das Formelement aus mindestens einem L-förmigen Bauteil (21) besteht, dessen kurzer Schenkel (22) über ein Gelenk (15) schwenkbar mit der festen Formaufspannplatte (11) verbunden ist, und dessen langer Schenkel (23) mit einem Klemmteil (31) in Verbindung steht, daß das Klemmteil an einen Verfahrantrieb angeschlossen ist, durch den es koaxial zur Mittenachse des langen Schenkels (23) des Formteils (21) verschiebbar ist, daß an dem Klemmteil im wesentlichen parallel zum kurzen Schenkel (22) des Formteils (21) geführter und den gleichen Abstand zum langen Schenkel (23) aufweisender Tragarm (33) vorgesehen ist, der über ein Gelenk schwenkbar mit der beweglichen Formaufspannplatte (12) verbunden ist, und daß die Schließkraftbaugruppe (41) koaxial zur durch die Gelenke (15, 16) geführten Hauptachse (I) zwischen der beweglichen Formaufspannplatte (12) und dem Tragarm (33) oder zwischen der festen Formaufspannplatte (11) und dem kurzen Schenkel (22) des Formteils (21) angeordnet ist.

2.  Spritzgießmaschine nach Anspruch 1, dadurch gekennzeichnet, daß das Klemmteil (31) an einen Aktuator (34) angeschlossen ist und beispielsweise hydraulisch antreibbar ist.

3.  Spritzgießmaschine nach Anspruch 1, dadurch gekennzeichnet,

daß das Klemmteil (31) die Form einer rechteckigen Platte (35) aufweist und in Schienen (27) des langen Schenkels (23) des Formteils (21) geführt wird.

4. Spritzgießmaschine nach Anspruch 1,
dadurch gekennzeichnet,
daß das Klemmteil (31) als Hülse (36) ausgestaltet ist, die den langen Schenkel (23) des Formteils (21) umgreift.

5. Spritzgießmaschine nach Anspruch 1,
dadurch gekennzeichnet,
daß das Klemmteil (31) als Kolben (24) ausgestaltet ist, der mit dem als Zylinder (26) ausgestalteten langen Schenkel (23) des Formteils (21) korrespondiert.

6. Spritzgießmaschine nach einem der Ansprüche 3 bis 5,
dadurch gekennzeichnet,
daß das Klemmteil (35, 36) eine Länge (L) aufweist und der an ihr befestigte Tragarm (33) in der Weise ausgestaltet ist, daß die Mittenachse (II) zur Hauptachse (I) einen Abstand (a) besitzt, wobei gilt

$$L < 2\mu a$$

mit $\mu$ = Reibfaktor.

7. Spritzgießmaschine nach Anspruch 3,
dadurch gekennzeichnet,
daß der lange Schenkel (23) des Formteils (21) aus zwei einander zugeneigten U-Profilen (28) aufgebaut ist, zwischen denen die Klemmplatte (35) führbar ist.

8. Spritzgießmaschine nach Anspruch 4,
dadurch gekennzeichnet,
daß der lange Schenkel (23) des Formteils (21) im Querschnitt als Rechteck ausgestaltet ist, wobei die größere Länge in der Ebene des kurzen Schenkels (22) liegt.

9. Spritzgießmaschine nach Anspruch 8,
dadurch gekennzeichnet,
daß die Schmalseiten des die rechteckige Querschnittsform besitzenden langen Schenkels (23) Längsnuten (29) aufweist, die mit der Hülse (36) korrespondieren.

10. Spritzgießmaschine nach Anspruch 9,
dadurch gekennzeichnet,
daß die Flanken der Längsnuten (29) einen Spreizwinkel $\alpha$ = 10 bis 30° besitzen.

11. Spritzgießmaschine nach mindestens einen der o. g. Ansprüche,

dadurch gekennzeichnet,
daß die die Gleitflächen des langen Schenkels (23) des Formteils (21), die mit dem Klemmteil (31) korrespondieren, eine Oberflächenrauhigkeit aufweisen, mit der ein Reibfaktor $\mu$ = 0,1 bis 0,6 erreicht wird.

12. Spritzgießmaschine nach Anspruch 1,
dadurch gekennzeichnet,
daß die Schließkraftbaugruppe (41) als Exzenter (42) ausgestaltet ist.

13. Spritzgießmaschine nach Anspruch 1,
dadurch gekennzeichnet,
daß die Schließkraftbaugruppe (41) als Kolben-Zylinder-Einheit (48) ausgestaltet ist, beispielsweise als Kurzhubzylinder.

14. Spritzgießmaschine nach Anspruch 1,
dadurch gekennzeichnet,
daß die Schließkraftbaugruppe (41) als Kniehebel (43) ausgestaltet ist.

15. Spritzgießmaschine nach Anspruch 14,
dadurch gekennzeichnet,
daß der Kniehebel (43) zwischen dem Tragarm (33) und der beweglichen Formaufspannplatte (12) angeordnet ist und daß das L-förmige Formteil (21) kopfendig am langen Schenkel (23) eine mit dem Maschinenbett (13) korrespondierende Lagerung (16) aufweist.

16. Spritzgießmaschine nach Anspruch 14,
dadurch gekennzeichnet,
daß der Kniehebel (43) mit seinem Pleuel (44) mit dem L-förmigen Formteil (21) und mit seinem Pleuel (45) mit dem Tragarm (33) verbunden ist, und daß jedes Pleuel (44, 45) einen eigenen Antrieb (46, 47) aufweist.

17. Spritzgießmaschine nach Anspruch 1,
dadurch gekennzeichnet,
daß der Verfahrantrieb (32) eine Kolben-Zylinder-Einheit (37) ist.

18. Spritzgießmaschine nach Anspruch 1,
dadurch gekennzeichnet,
daß der Verfahrantrieb (32) eine elektrisch angetriebene Spindel-Mutter-Einheit (38) ist.

19. Spritzgießmaschine nach Anspruch 1,
dadurch gekennzeichnet,
daß der Verfahrantrieb (32) ein Drehantrieb ist, der über eine Kette (39) das Klemmteil (31) bewegt.

20. Spritzgießmaschine nach Anspruch 1,
dadurch gekennzeichnet,
daß die Führung (14) als Wälzführung (17) ausgestaltet ist.

**Claims**

1. An injection-moulding machine having a fixed mould clamping plate (11) fastened to the machine bed (13), which plate communicates by means of a shaped element with a movable mould clamping plate (12) movable on a guide connected to the machine bed (13), and having a separately driven clamping-force assembly (41) located between the shaped element and one of the mould clamping plates (11, 12), characterised in that the shaped element consists of at least one L-shaped component (21), the short arm (22) of which is connected pivotably to the fixed mould clamping plate (11) by means of an articulation (15), and the long arm (23) of which communicates with a clamping part (31), the clamping part is connected to a travelling drive by means of which it is displaceable coaxially to the central axis of the long arm (23) of the shaped part (21),
[a] supporting arm (33) is provided guided on the clamping part substantially parallel to the short arm (22) of the shaped part (21) and having the same distance from the long arm (23), which supporting arm is connected pivotably to the movable mould clamping plate (12) by means of an articulation, and the clamping-force assembly (41) is arranged coaxially to the main axis (I), which passes through the articulations (15, 16), between the movable mould clamping plate (12) and the supporting arm (33) or between the fixed mould clamping plate (11) and the short arm (22) of the shaped part (21).

2. An injection-moulding machine according to Claim 1, characterised in that the clamping part (31) is connected to an actuator (34) and can be driven for example hydraulically.

3. An injection-moulding machine according to Claim 1, characterised in that the clamping part (31) is in the form of a rectangular plate (35) and is guided in rails (27) of the long arm (23) of the shaped part (21).

4. An injection-moulding machine according to Claim 1, characterised in that the clamping part (31) is in the form of a sleeve (36) which surrounds the long arm (23) of the shaped part (21).

5. An injection-moulding machine according to Claim 1, characterised in that the clamping part (31) is in the form of a piston (24) which corresponds with the long arm (23) of the shaped part (21), which is designed as a cylinder (26).

6. An injection-moulding machine according to one of Claims 3 to 5, characterised in that the clamping part (35, 36) has a length (L) and the supporting arm (33) fastened thereto is designed such that the central axis (II) is at a distance (a) from the main axis (I), where

$$L < 2\mu a$$

$\mu$ being the coefficient of friction.

7. An injection-moulding machine according to Claim 3, characterised in that the long arm (23) of the shaped part (21) is constructed of two U-profiles (28) inclined towards each other, between which the clamping plate (35) can be guided.

8. An injection-moulding machine according to Claim 4, characterised in that the long arm (23) of the shaped part (21) is in the form of a rectangle in cross-section, the greater length lying in the plane of the short arm (22).

9. An injection-moulding machine according to Claim 8, characterised in that the narrow sides of the long arm (23) which is of the rectangular cross-sectional form has longitudinal grooves (29) which correspond to the sleeve (36).

10. An injection-moulding machine according to Claim 9, characterised in that the flanks of the longitudinal grooves (29) have a spreading angle $\alpha$ of 10 to 30°.

11. An injection-moulding machine according to at least one of the above claims, characterised in that the sliding faces of the long arm (23) of the shaped part (21) which correspond to the clamping part (31) have a surface roughness with which a coefficient of friction $\mu$ of 0.1 to 0.6 is achieved.

12. An injection-moulding machine according to Claim 1, characterised in that the clamping-force assembly (41) is in the form of an eccentric (42).

13. An injection-moulding machine according to Claim 1, characterised in that the clamping-force assembly (41) is in the form of a piston-cylinder unit (48), for example a short-stroke cylinder.

14. An injection-moulding machine according to Claim 1, characterised in that the clamping-force assembly (41) is in the form of a toggle lever (43).

15. An injection-moulding machine according to Claim 14, characterised in that the toggle lever (43) is arranged between the supporting arm (33) and the movable mould clamping plate (12) and that the L-shaped shaped part (21) has at its top end on the long arm (23) a bearing (16) which corresponds to the machine bed (13).

**16.** An injection-moulding machine according to Claim 14, characterised in that the toggle lever (43) is connected by its connecting-rod (44) to the L-shaped shaped part (21) and by its connecting-rod (45) to the supporting arm (33), and that each connecting-rod (44, 45) has its own drive (46, 47).

**17.** An injection-moulding machine according to Claim 1, characterised in that the travelling drive (32) is a piston-cylinder unit (37).

**18.** An injection-moulding machine according to Claim 1, characterised in that the travelling drive (32) is an electrically driven spindle-nut unit (38).

**19.** An injection-moulding machine according to Claim 1, characterised in that the travelling drive (32) is a rotary drive which moves the clamping part (31) via a chain (39).

**20.** An injection-moulding machine according to Claim 1, characterised in that the guide (14) is in the form of an anti-friction guideway (17).

**Revendications**

**1.** Machine de coulée par injection, comportant une plaque de fixation de moule (11), fixe, fixée au banc de machine (13), qui est en liaison, par l'intermédiaire d'un élément de moule, avec une plaque de fixation de moule (12) mobile, déplaçable sur un guide relié au banc de machine (13), et comportant un ensemble mécanique de fermeture (41), entraîné de façon séparée, agencé entre l'élément de moule et une des plaques de fixation de moule (11,12),
caractérisée en ce que l'élément de moule est constitué d'au moins une pièce (21) en forme de L, dont la branche courte (22) est reliée, par l'intermédiaire d'une articulation (15), de façon pivotante, à la plaque de fixation de moule (11) fixe, et dont la branche longue (23) est en liaison avec une pièce de serrage (31), en ce que la pièce de serrage est raccordée à un entraînement de déplacement grâce auquel elle peut être déplacée coaxialement à l'axe central de la branche longue (23) de la pièce (21), en ce que, sur la pièce de serrage, il est prévu un bras de support (33) présentant le même écartement par rapport à la branche longue (23) et guidé de façon généralement parallèle par rapport à la branche courte (22) de la pièce (21), lequel est relié, par l'intermédiaire d'une articulation, de façon pivotante, à la plaque de fixation de moule mobile (12), et en ce que l'ensemble mécanique de fermeture (41) est agencé coaxialement à l'axe principal (I) guidé à travers les articulations (15,16) entre la plaque de fixation de moule mobile (12) et le bras de support (33) ou entre la plaque de fixation de moule fixe (11) et la branche courte (22) de la pièce (21).

**2.** Machine de coulée par injection selon la revendication 1,
caractérisée en ce que la pièce de serrage (31) est raccordée à un actionneur (34) et peut être entraînée, par exemple, de façon hydraulique.

**3.** Machine de coulée par injection selon la revendication 1,
caractérisée en ce que la pièce de serrage (31) présente la forme d'une plaque rectangulaire (35) et est guidée dans des rails (27) de la branche longue (23) de la pièce (21).

**4.** Machine de coulée par injection selon la revendication 1,
caractérisée en ce que la pièce de serrage (31) est réalisée comme douille (36) qui entoure la branche longue (23) de la pièce (21).

**5.** Machine de coulée par injection selon la revendication 1,
caractérisée en ce que la pièce de serrage (31) est réalisée comme piston (24) qui correspond à la branche longue (23) de la pièce (21), réalisée comme cylindre (26).

**6.** Machine de coulée par injection selon une des revendications 3 à 5,
caractérisée en ce que la pièce de serrage (35,36) présente une longueur (L) et le bras de support (33) fixé à celle-ci est réalisé de façon que l'axe central (II) présente, par rapport à l'axe principal (I), une distance (a), avec $L < 2\mu a$, où $\mu$ = facteur de friction.

**7.** Machine de coulée par injection selon la revendication 3,
caractérisée en ce que la branche longue (23) de la pièce (21) est formée de deux profilés en U (28) inclinés l'un vers l'autre, entre lesquels peut être guidée la plaque de serrage (35).

**8.** Machine de coulée par injection selon la revendication 4,
caractérisée en ce que la branche longue (23) de la pièce (21) présente une section transversale rectangulaire, la plus grande longueur s'étendant dans le plan de la branche courte (22).

**9.** Machine de coulée par injection selon la revendication 8,
caractérisée en ce que les côtés étroits de la branche longue (23) présentant une section transversale rectangulaire présentent des rainures longitudinales (29) qui correspondent à la douille (36).

**10.** Machine de coulée par injection selon la revendication 9,
caractérisée en ce que les flancs des rainures longitudinales (29) présentent un angle d'écartement $\alpha = 10$ à 30°.

**11.** Machine de coulée par injection selon au moins une des revendications précédentes,
caractérisée en ce que les surfaces de glissement de la branche longue (23) de la pièce (21), qui correspondent à la pièce de serrage (31), présentent une rugosité de surface par laquelle un facteur de friction $\mu = 0,1$ à 0,6 est atteint.

**12.** Machine de coulée par injection selon la revendication 1,
caractérisée en ce que l'ensemble mécanique de fermeture (41) est réalisé comme excentrique (42).

**13.** Machine de coulée par injection selon la revendication 1,
caractérisée en ce que l'ensemble mécanique de fermeture (41) est réalisé comme vérin (48), par exemple vérin à faible course.

**14.** Machine de coulée par injection selon la revendication 1,
caractérisée en ce que l'ensemble mécanique de fermeture (41) est réalisé comme levier coudé (43).

**15.** Machine de coulée par injection selon la revendication 14,
caractérisée en ce que le levier coudé (43) est agencé entre le bras de support (33) et la plaque de fixation de moule mobile (12), et en ce que la pièce (21) en forme de L présente, à l'extrémité de tête, sur la branche longue (23), un moyen de montage (16) correspondant au banc de machine (13).

**16.** Machine de coulée par injection selon la revendication 14,
caractérisée en ce que le levier coudé (43) est relié, par sa bielle (44), à la pièce (21) en forme de L et, par sa bielle (45), au bras de support (33), et chaque bielle (44,45) présente un entraînement propre (46,47).

**17.** Machine de coulée par injection selon la revendication 1,
caractérisée en ce que l'entraînement de déplacement (32) est un vérin (37).

**18.** Machine de coulée par injection selon la revendication 1,
caractérisée en ce que l'entraînement de déplacement (32) est une unité tige filetée-écrou (38) entraînée électriquement.

**19.** Machine de coulée par injection selon la revendication 1,
caractérisée en ce que l'entraînement de déplacement (32) est un entraînement rotatif, qui déplace la pièce de serrage (31) par l'intermédiaire d'une chaîne (39).

**20.** Machine de coulée par injection selon la revendication 1,
caractérisée en ce que le guide (14) est réalisé comme guide à rouleaux (17).

# Fig.1

# Fig. 2

# Fig. 3

EP 0 856 391 B1

# Fig. 4

# Fig.5

Fig. 6

# Fig. 7

33

36

23

h

L

b

29

α